# EUROPÄISCHE PATENTANMELDUNG

(11) **EP 0 967 123 A2**
(43) Veröffentlichungstag der Anmeldung: **29.12.1999**
(21) Anmeldenummer: 99110948.9
(22) Anmeldetag: 07.06.1999
(51) Int. Cl.: B60R 21/00, B60R 21/16

(54) **Sicherheitsvorrichtung für ein Kraftfahrzeug mit einem Mehrkammer-Airbag**

(30) Priorität: 24.06.1998 DE 19828162
(71) Anmelder: Volkswagen Aktiengesellschaft, 38436 Wolfsburg (DE)
(72) Erfinder: Sinnhuber, Ruprecht, Dipl.-Ing., 38518 Gifhorn (DE)

(57) **Zusammenfassung**

Die Erfindung betrifft eine Sicherheitsvorrichtung für ein Kraftfahrzeug mit einem Mehrkammer-Airbag (1), der bei wenigstens einen bei einem Fahrzeugaufprall aktivierbaren Gasgenerator (6) aufblasbar ist. Nach dem Hauptpatent (Patentanmeldung P 198 16 075.5) weist dieser Mehrkammer-Airbag wenigstens einen mit wenig Energie schnell aufblasbaren Tast-Airbag (2-4) auf, der in den Aufblasbereich wenigstens einer weiteren Airbagkammer (5) aufblasbar ist, und dort ein möglicherweise diesem Bereich vorhandenes Hindernis in einer sogenannten 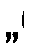 Out-of-Position"-Situation ertastet. In einer Weiterbildung dieser Erfindung wird hier vorgeschlagen, die über die Tast-Airbags vornehmbare Beeinflussung des Gasgenerators (6) auf ein vorgegebenes Zeitfenster zu begrenzen.

## Beschreibung

Die Erfindung betrifft eine Sicherheitsvorrichtung für ein Kraftfahrzeug mit einem Mehrkammer-Airbag nach dem Hauptpatent (Patentanmeldung P198 16 075.5).

Die in dem Hauptpatent (Patentanmeldung P198 16 075.5) beschriebene Sicherheitsvorrichtung stellt eine Optimierung der aus der EP 0 836 971 A1 bekannt gewordenen Lösung dar. Zur Behebung des sogenannten 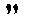 Out-of-Position"-Problems wird dort vorgeschlagen, daß mittels einer geeigneten Sensorik das Ausbreitungsverhalten eines zu einer Airbageinrichtung gehörenden Luftsackes erfaßt wird. Auf der Basis der von der Sensorik erzeugten Signale wird mittels einer Steuereinrichtung eine ebenfalls zur Airbageinrichtung gehörende Aufblaseinrichtung gezielt beeinflußt, um beispielsweise beim Auftreffen des Luftsackes auf ein Hindernis die weitere Befüllung des Luftsackes mit Gasmassenstrom entweder ganz zu unterbinden oder doch deutlich zu reduzieren.

Der Erfindung liegt die Aufgabe zugrunde, die Sicherheitsvorrichtung nach dem Hauptpatent (Patentanmeldung P198 16 075.5) weiterzubilden.

Diese Aufgabe wird gelöst mit einer Sicherheitsvorrichtung gemäß den Merkmalen des Patentanspruchs 1 und/oder 2. Die Unteransprüche betreffen besonders zweckmäßige Weiterbildungen dieser Lösungsvarianten.

Erfindungsgemäß wird die Vorgabe eines Zeitfensters in der Steuereinrichtung vorgesehen, damit nicht schon deshalb Schaltsignale erzeugt werden, weil sich das als Mehrkammer-Airbag ausgeführte Luftsacksystem noch im zusammengefalteten Zustand größtenteils in seiner Ruheposition befindet. Je nach Fahrzeuggegebenheit ist nach der Aktivierung der bevorzugt als Gasgenerator ausgeführten Aufblaseinrichtung die Öffnung des Zeitfensters zu einem Zeitpunkt t₁ so zu legen, daß sich die den Tast-Airbags zugeordneten Schaltelemente eindeutig von der Hauptkammerhülle haben entfernen können. Das Ende des Zeitfensters zu einem Zeitpunkt t₂ ist so zu bestimmen, daß nicht nach ordnungsgemäßer Entfaltung des gesamten Luftsacksystems und anschließender Abstützung des Fahrzeuginsassen noch weitere Signale erzeugt werden können. Mit der Vorgabe des Zeitfensters wird also sichergestellt, daß nur in der Entfaltungsphase innerhalb eines für die Erfassung einer 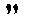 Out-of-Position"-Situation wichtigen Zeitabschnittes die Schaltelemente aktiviert sind.

Ergänzend oder alternativ ist zur weiteren Optimierung der Lösung nach dem Hauptpatent vorgesehen, daß insbesondere bei der Ausführung der Schaltelemente als Bestandteile eines Elektroschalters ein einfacher Aufbau des Luftsacksystems möglich ist. Durch Einweben dünner Metallfäden, die sowohl Schaltelemente als auch zur Steuereinrichtung führende Signalleitungen sein können, werden keine zusätzlichen Bauteile am eigentlichen Luftsacksystem selbst erforderlich. Dieses kann in konventioneller Weise zusammengefaltet werden und erhält durch die eingewebten dünnen Metallfäden auch keine grundsätzlich andere Entfaltungscharakteristik. Gleiches gilt im Falle der Verwendung von dünnen Folien oder durch Aufbringen von Metallbedampfungen an für die Sensierung wichtigen Hüllenabschnitten.

Die vorbeschriebenen Schaltelemente sind bevorzugt so zueinander angeordnet, daß bei einer durch Störung des normalen Ausbreitungsverhaltens verursachten Berührung und/oder Näherung wenigstens ein Steuersignal erzeugbar ist, das in einer der Aufblaseinrichtung zugeordneten Steuereinrichtung verarbeitbar ist. Bevorzugt wird ein Luftsacksystem nach dem Hauptpatent verwendet. Die Befüllung der bereits erwähnten TastAirbags geht der Befüllung einer oder mehrerer Hauptkammern voran und wird zur Sensierung der in einem Unfall vorliegenden Innenraumsituation genutzt. Durch eine für jeweiligen Fahrzeugbedingungen empirisch zu ermittelnde Anordnung von Schaltelementen wird erfindungsgemäß dafür gesorgt, daß bei einer nicht planmäßigen Ausbreitung der Tast-Airbags deren Hüllen beispielsweise mit Hüllenabschnitten der sich ebenfalls ausbreitenden Hauptkammer kollidieren. Aus dieser Kollision kann bei erfindungsgemäßer Ausbildung der Schaltelemente als Bestandteil eines Elektroschalters ein Signal erzeugt werden, durch das in unterschiedlicher Weise die Aufblaseinrichtung beeinflußbar ist. Ist diese beispielsweise als Mehrstufengenerator ausgeführt, kann ein auf die vorgenannte Weise erzeugtes Schaltsignal benutzt werden, um die Zündung weiterer Stufen zu unterbinden. Ergänzend oder alternativ kann auch der aus der Aufblaseinrichtung gelieferte Gasmassenstrom mittels Ventileinrichtungen an den Hauptkammern in der Weise vorbeigelenkt werden, daß diese nicht weiter befüllt werden.

Ein vorteilhaftes Ausführungsbeispiel der Erfindung ist in der Zeichnung dargestellt. Es zeigt:
- Fig.1: in schematischer Darstellung einen mit Schaltelementen ausgrüsteten Mehrkammer-Airbag und
- Fig.2: eine Illustration zur Auslegung eines Zeitfensters in einer Steuereinrichtung.

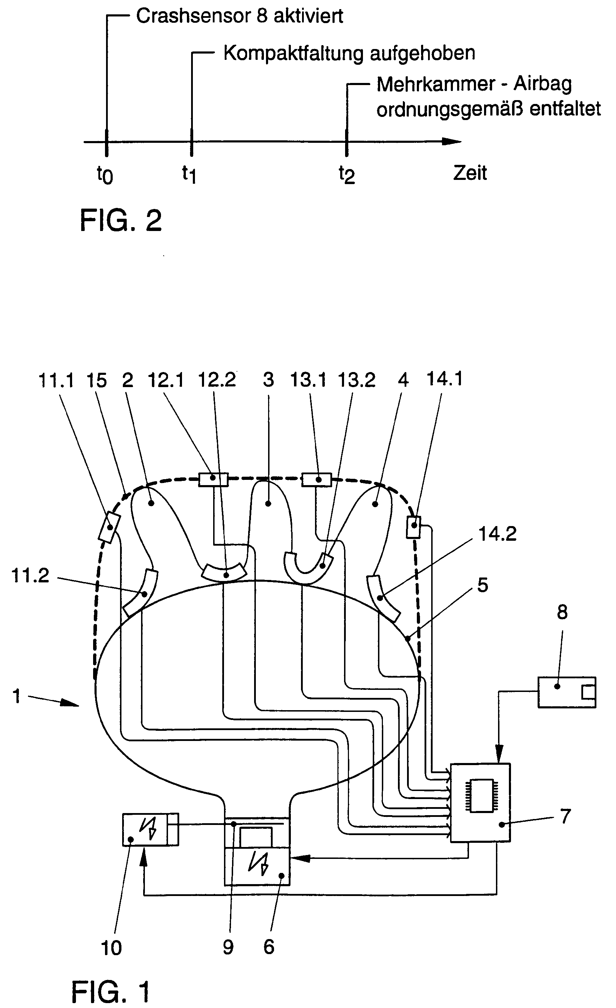

Man erkennt in Fig.1 im vollständig entfalteten Zustand ein insgesamt mit 1 bezeichnetes Luftsacksystem dessen wesentlichen Bestandteile hier Tast-Airbags 2 bis 4 und eine Hauptkammer 5 sind. Die Befüllung der vorgenannten Luftkammern erfolgt über einen hier einstufig ausgeführten Gasgenerator 6, der von einer Steuereinrichtung 7 aktivierbar ist. Diese ist ihrerseits mit einem Crash-Sensor 8 verbunden, durch den fur ein hier nicht weiter dargestelltes Fahrzeug eine Unfallsituation erkennbar ist. Der aus dem Gasgenerator 6 gelieferte Gasmassenstrom kann durch eine hier symbolisch dargestellte Blende 9 abgeregelt werden, die ihrerseits durch ein pyrotechnisches Stellglied 10 antreibbar ist. Letzteres ist ebenfalls an die Steuereinrichtung 7 angeschlossen und wird beispielsweise dann aktiviert, wenn Schaltelemente 11 bis 14 über hier nicht weiter bezifferte Signalleitungen der Steuereinrichtung 7 das Auftreffen des Luftsacksystems 1 auf ein Hindernis melden. Gemäß einer besonders vorteilhaften Weiterbildung der Erfindung sind hier die freien Enden der Tast-Airbags 2 bis 4 mittels eines Netzes 15 verbunden, um die lokale Aggressivität der Tast-Airbagsspitzen zu reduzieren. Anstelle eines Netzes kann auch eine durchbrochene Folie verwendet werden. Dieses Zusatznetz 15 ist hier als Trägerelement für die Schaltelemente 11.1 bis 14.1 ausgeführt. Die hier gewählte Anordnung ist rein schematischer Natur und kann ggf. auch dahingehend variiert werden, daß einzelne der mit dem 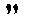 .1" versehenen Schaltelemente auch auf Hüllenabschnitten der Tast-Airbags 2 bis 4 angeordnet sein können. Die Schaltelemente 11.2 bis 14.2 befinden sich hier im Übergangsbereich zwischen den Tast-Airbags 2 bis 4 und der Hauptkammer 5. Beim Auftreffen auf ein Hindernis werden einzelne oder mehrere der Schaltelemente miteinander in Kontakt gebracht und erzeugen so in der Steuereinrichtung 7 ein Steuersignal zur Beeinflussung des Antriebes 10. Bei einem als Mehrstufengenerator ausgeführten Gasgenerator könnte auch die Zündung weitere Generatorstufen unterbunden werden.

Bei dem in der Zeichnung dargestellten Ausführungsbeispiel wird das Vorfeld der Hauptkammer 5 mit relativ geringer Energie durch die Tast-Airbags 2 bis 4 abgetastet. Mit den unterschiedlich auf der Oberfläche verteilten Schaltelementen 11 bis 14 kann dabei sogar die Charakteristik der jeweils erfaßten 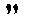 Out-of-Position"-Situation erfaßt werden. Dementsprechend kann beispielsweise auch im Gasgenerator 6 eine Gasleiteinrichtung zugeordnet werden, durch die der Gasmassenstrom situationsgerecht in bestimmte Bereiche der Hauptkammer 5 gelenkt wird, um so beispielsweise das Luftsacksystem 1 am Hindernis vorbeizuschießen. Auch durch diese Maßnahme kann der gesamten Airbageinrichtung Aggressivität genommen werden. Die vorstehend beschriebene Zusammenhänge können auf unterschiedliche Airbagtypen abgewendet werden. Entsprechende Auslegungen können also beispielsweise für Knie-, Kopf-, Thorax-, Seiten- und Lenkrad-Airbags vorgesehen werden.

Der in Fig. 2 dargestellte Zusammenhang verdeutlicht, daß nach unfallbedingter Aktivierung des Crashsensors 8 zunächst eine Zeitspane t₁-t₀ abgewartet wird, damit der Mehrkammer-Airbag aus der im Ruhezustand vorliegenden Kompaktfaltung gelöst ist bevor die eigentliche Sensierung beginnt. Zum Zeitpunkt t₁ ist sichergestellt, daß nicht durch Faltung verursachte Kontakte und damit Fehlsignale vorliegen. In der Zeitspanne t₂-t₁ wird dann der Fahrzeuginnenraum auf eine ggf. vorliegende OOP-Situation auf die oben beschriebene Weise abgefühlt. Zum Zeitpunkt t₂ ist schließlich das gesamte Luftsacksystem entweder zur Abstützung des Insassen befüllt oder wegen Vorliegens einer OOP-Situation der Aufblasvorgang vorzeitig abgebrochen bzw. hinsichtlich Intensität und/oder Richtung des Gasmassenstroms verändert worden.

## Patentansprüche

1. Sicherheitsvorrichtung für ein Kraftfahrzeug mit einem Mehrkammer-Airbag, der über wenigstens einen bei einem Fahrzeugaufprall aktivierbaren Gasgenerator aufblasbar ist, mit
wenigstens einem relativ kleinvolumigen, fingerartig mit wenig Energie schnell aufblasbaren Tastairbag (2-4) mit Tastfunktion, welcher in den Aufblasbereich wenigstens einer weiteren, großvolumigeren Airbagkammer (5) mit Abstützfunktion aufblasbar und/oder bewegbar ist und dort ein möglicherweise in diesem Bereich vorhandenes Hindernis, insbesondere einen Insassen außerhalb einer Normalposition (out of position; OOP) ertastet,
einer dem wenigstens einen Tastairbag (2-4) zugeordneten Vorrichtung zur Tasterkennung (11-14), die beim Auftreffen wenigstens eines der Tastairbags (2-4) ein wenigstens während der Airbag-Aufblasphase verwertbares Steuersignal abgibt, einer dem wenigstens einen Gasgenerator (6) zugeordneten Steuereinrichtung (7) für die in den Mehrkammer-Airbag (1) einströmende Gasmenge, die mit der Tasterkennung (11-14) verbunden ist, und die bei der Beaufschlagung mit einem Steuersignal eine weitere Aufblasfunktion des Gasgenerators (6) für den Mehrkammer-Airbag (1) unterbindet oder wenigstens reduziert,
nach Patent (Patentanmeldung P198 16 075.5), dadurch gekennzeichnet, daß nach Aktivierung des Gasgenerators (6) in der Steuereinrichtung (7) innerhalb einer vorgegebenen Zeitspanne die Signale der Schaltelemente (11-14) verarbeitbar sind.

2. Sicherheitsvorrichtung für ein Kraftfahrzeug mit einem Mehrkammer-Airbag, der über wenigstens einen bei einem Fahrzeugaufprall aktivierbaren Gasgenerator aufblasbar ist, mit
wenigstens einem relativ kleinvolumigen, fingerartig mit wenig Energie schnell aufblasbaren Tastairbag (2-4) mit Tastfunktion, welcher in den Aufblasbereich wenigstens einer weiteren, großvolumigeren Airbagkammer (5) mit Abstützfunktion aufblasbar und/oder bewegbar ist und dort ein möglicherweise in diesem Bereich vorhandenes Hindernis, insbesondere einen Insassen außerhalb einer Normalposition (out of position; OOP) ertastet,
einer dem wenigstens einen Tastairbag (2-4) zugeordneten Vorrichtung zur Tasterkennung (11-14), die beim Auftreffen wenigstens eines der Tastairbags (2-4) ein wenigstens während der Airbag-Aufblasphase verwertbares Steuersignal abgibt, einer dem wenigstens einen Gasgenerator (6) zugeordneten Steuereinrichtung (7) für die in den Mehrkammer-Airbag (1) einströmende Gasmenge, die mit der Tasterkennung (11-14) verbunden ist, und die bei der Beaufschlagung mit einem Steuersignal eine weitere Aufblasfunktion des Gasgenerators (6) für den Mehrkammer-Airbag (1) unterbindet oder wenigstens reduziert,
nach Patent (Patentanmeldung. P198 16 075.5), insbesondere nach Patentanspruch 1, dadurch gekennzeichnet, daß die Vorrichtung zur Tasterkennung aus Schaltelementen (11-14) im vorderen Bereich des Tastbags (2-4) besteht, die beim Auftreffen auf ein Hindernis ihre Relativstellung ändern und als Steuersignal einen Schaltkreis öffnen oder bevorzugt schließen und einen Elektroschalter bilden.

3. Sicherheitsvorrichtung nach Anspruch 2,
dadurch gekennzeichnet, daß
wenigstens eines der Schaltelemente (11-14) durch partielle Metallbedampfung von Luftsackgewebe erzeugt ist.

4. Sicherheitsvorrichtung nach Anspruch 3,
dadurch gekennzeichnet, daß
wenigsten eines der Schaltelemente (11-14) durch in das Luftsackgewebe eingewebte Metallfäden gebildet ist.

5. Sicherheitsvorrichtung nach Anspruch 3,
dadurch gekennzeichnet, daß
wenigstens eines der Schaltelemente (11-14) Sicherheitsvorrichtung durch eine dem Luftsackgewebe applizierte Metallfolie gebildet ist.

6. Sicherheitsvorrichtung nach Anspruch 1,
dadurch gekennzeichnet, daß
freie Enden mehrerer Tast-Airbags (2-4) durch eine durchbrochene Folie oder durch ein Netz (15) verbunden sind.

7. Sicherheitsvorrichtung nach Anspruch 6,
dadurch gekennzeichnet, daß
die durchbrochene Folie oder das Netz (15) als Träger wenigstens eines Schaltelementes ausgebildet ist.
